# EUROPEAN PATENT APPLICATION

(11) **EP 1 775 180 A2**
(43) Date of publication of application: **18.04.2007**
(21) Application number: 06019962.7
(22) Date of filing: 25.09.2006
(51) Int. Cl.: B60R 21/272

(54) **Dual stage hybrid airbag inflator**

(30) Priority: 17.10.2005 US 251206
(71) Applicant: KEY SAFETY SYSTEMS, INC., Sterling Heights, MI 48314 (US)
(72) Inventor: Kelley, Michael E., Valrico Florida 33594 (US); Mulville, Michael F., Bartow Florida 33830 (US); Hosey, Edward O., Lakeland Florida 33813 (US); Curtis, Anthony J., Palm Harbor Florida 34684 (US)
(74) Representative: Gislon, Gabriele

(57) **Abstract**

An airbag inflator (10) has a outer inflator housing (11) forming a pressure vessel (12) for storing inert gas (13) within a first end portion (10A); a second end portion (10C) forming a separate combustion chamber (90), and an intermediate gas diffuser portion (10B) interposed between the first and second end portions (10A, 10C) for exhausting gases from the airbag inflator (10) into an airbag. The airbag inflator (10) has a first gas generator subassembly (23) disposed within the first end portion (10A) and in communication with the stored inert gas (13). A second gas generator subassembly (80) has a combustion chamber (90) that is located in the second end portion (10C) and isolated from the inert gas by one or more rupturable burst disks (24A, 24B, 24C). The actuation of the airbag inflator (10) can be accomplished such that one or both of the gas generator subassemblies (23, 80) can be activated. The activation can be simultaneous or sequential permitting either very rapid full filling of the airbag or slower prolonged filling.

## Description

The present invention relates to a dual stage inflator capable of providing various levels of inflation for inflating an airbag.

Inflators provide inflation gas by burning a pyrotechnic material, releasing stored gas, or by some combination thereof. Aggressive airbag deployment has the advantage of deploying an inflated airbag in front of the vehicle occupant as soon as possible. The problem associated with aggressive airbag deployment is the possibility of a child, a small adult, or an out of position adult interacting with the airbag while it is being inflated. Out of position is a term utilized in the safety restraint industry that refers to a vehicle occupant that is not sitting properly in his seat or sitting too close to the airbag module.

Dual stage inflators reduce the injury to small adults or children by reducing the aggressiveness of airbag deployment. These inflators provide varying output levels of inflation gas in accordance with the size and position of the vehicle occupant. Dual stage inflators provide a full output of inflation gas to protect a full size vehicle occupant who is not out of position. A dual stage inflator is also able to provide a staged output of inflation gas for vehicle occupants who are smaller in size or out of position. The staged output deployment first provides inflation gas to partially inflate the airbag and after a period of time the inflator provides more inflation gas to fill the airbag.

Dual stage inflators disclosed in US 6 189 922 B1 and US 6 168 200 B1 have two gas generant sources. Dual stage inflators having two separate burst disks are disclosed in US 5 022 674 A1, US 5 351 988 A1 and US 5 016 914 A1.

US 6 557 890 B1 discloses a hybrid inflator that has two charges for gas production arranged outside on opposite sides of a gas chamber charged with compressed gas. The compressed gas is completely separated from the ignitable gas charges. A similar construction is disclosed in JP 2004-026025 entitled "Gas Generator for Air Bag". US 6 557 890 B1 relies on a piston to separate the ignition gas from the compressed gas which according to JP 2004-026025 is very difficult to move causing unusual pressure rises internal to the inflator that may destroy the housing. To avoid this JP 2004-026025 discloses an inflator that employs a ball-like destructive means that acts like a check valve that can normally seal the inert gas, but upon ignition of a charge is unseated and moved into the gas chamber colliding with a burst disk. Both of these inflators require extra components and increase the length of the inflator accommodating the ignitable charges thereby reducing the amount of length available for the compressed gas. To accommodate this loss of volume the compressed gas chamber in each case typically has an enlarged diameter of 60 mm or greater. Ideally a hybrid inflator should be small in size, but extremely reliable. Reliability often requires a desire to simplify and eliminate unnecessary features or elements.

Figure 4 shows a prior art inflator 100 according to US 6,769,714 B2 that has a housing 110 wherein a gas generator subassembly 122 is located inside of a pressure vessel 112 and two separate igniters 121, 122 were used. One igniter 122 would ignite an enhancer charge 130 and gas generant charge 140 in the subassembly 120 while the second igniter 121 could be used to rupture a seal 150 to allow the compressed gas 111 to be released. The igniters 121, 122 could be used sequentially or separately or simultaneously if so desired to achieve variations in the airbag fill rate. The present invention provides some of the very reliable aspects of this earlier inflator in combination with new elements to achieve the extremely reliable dual stage inflator described herein. The present invention according to Claim 1 provides a more efficient use of the space available for the inflator while providing a variety of inflation fill rates and volumes.
FIG. 1 is a cross sectional view of the dual stage inflator in the present invention.
FIGS. 2A, 2B, 2C, and 2D show various burst disk configurations.
FIG. 3 is a perspective view of the first gas generator subassembly.
FIG. 4 shows a prior art inflator according to US 6,769,714 B2.

The present invention provides a dual stage inflator 10 with various output levels of inflation gas to gently inflate an airbag so as not to injure an out of position child or small adult while still being capable of providing crash protection to a full size adult. The dual stage inflator 10 comprises a cylindrical elongated outer inflator housing 11 forming a pressure vessel 12 having a first portion 10A that is filled with stored gas 13, which is released from the inflator during a crash to inflate a vehicle airbag. The outer inflator housing 11 of the dual stage inflator 10 has a generally cylindrical shape and may be formed of stainless steel, low carbon steel, or any other suitable material, which has sufficient strength and extremely low gas permeability.

Ideal characteristics for the stored gas 13 are that the gas is inert, is not highly temperature sensitive, and is capable of inflating an airbag at a high inflation rate. The stored gas 13 can include one or more gases, which include but are not limited to argon, carbon dioxide, oxygen, helium, and nitrogen.

The pressure vessel 12 is filled with stored gas 13 through the gas fill port 14, which is preferably located on a first end closure 20 of the dual stage inflator 10. The gas fill port 14 is sealed by a plug 15 made from low carbon steel to prevent gas from escaping after the dual stage inflator 10 has been filled to the specified pressure. It is preferred that the plug 15 is secured to the gas fill port 14 by a resistance weld, but one skilled in the art realizes that other types of welding could be utilized to fuse the plug 15 to the outer inflator housing 11.

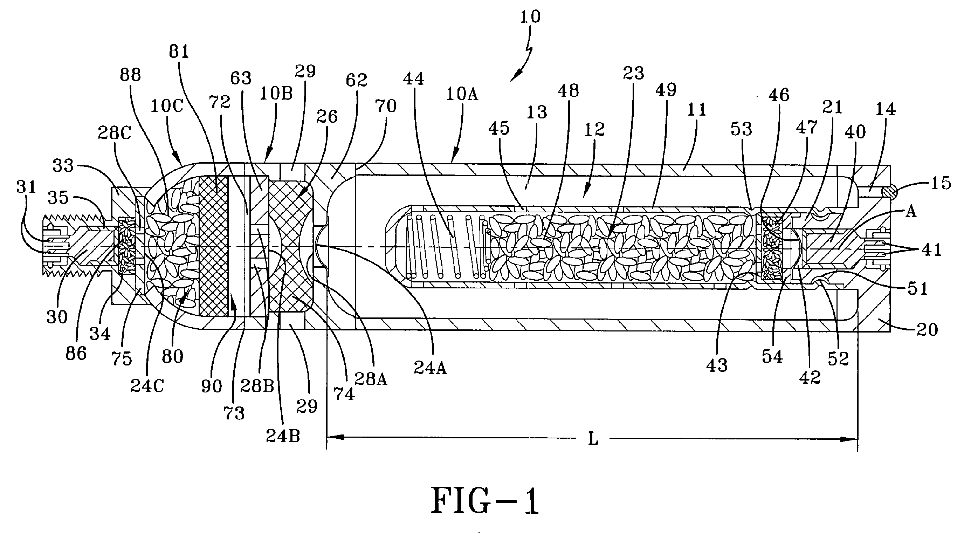

In FIG. 1, the dual stage inflator 10 has a first end closure 20 and a central support column 21 holding a first gas generator subassembly 23. The first gas generator subassembly 23 lies centrally disposed within the pressure vessel and extends longitudinally along the longitudinal axis A of the outer inflator housing 11 a distance extending nearly the entire length L of the internal chamber of the pressure vessel 12, as shown about 85% of L.

In FIG. 1, the first gas generator subassembly 23 is situated on the support column 21 of the inflator first end closure 20. The first gas generator subassembly 23 has an igniter 40 for receiving an electrical signal from a controller (not shown) via two or more electrodes 41 that in turn communicate with a sensor means (not shown). The igniter 40 is an electrical device that initiates the activation of the inflator when a suitable electric current is passed through a resistor element embedded in one or more layers of pyrotechnic compositions. The igniter may be of the standard direct fire design, receiving the firing current directly from the controller, or the igniter 40 may be of an advanced design which communicates with the controller by digital signals and which contains on board the igniter an application specific integrated circuit, firing capacitor, and related components.

The pyrotechnic compositions and load weight contained within the igniter 40 are designed to break through the gas tight sealing disk 46 and fully ignite the enhancer 47. An example of a suitable pyrotechnic composition or ignition material for the present invention is zirconium potassium perchlorate, however, one skilled in the art realizes that other ignition materials can be utilized in the present invention. The igniter 40 is encased in an igniter housing opening 42 in the support column 21 of the end closure 20, which is attached to the outer inflator housing 11.

The enhancer 47 may be any of a number of known compositions that are readily ignited by the igniter 40 and burn at a high rate and temperature. Examples of enhancers include boron potassium nitrate and non-azide formulations containing a metal. The gases and hot burning particles from the ignited enhancer 47 exit through the pellet retainer 43 and ignite the gas generant 48. The first gas generator subassembly 23 has a spring like cushion 44 located on the end furthest away from the enhancer 47. The cushion 44 is a resilient member that biases the gas generant 48 against the pellet retainer 43 to ensure the gas generant 48 pellets occupy a predetermined volume without being able to rattle. The pellet retainer 43 is a porous wall that divides the enhancer 47 from the gas generant 48. An optional sealing foil may be used to cover the openings of the pellet retainer 43. The hot gases from the ignition of the enhancer 47 flow through the pellet retainer 43 but neither the enhancer 47 material nor the gas generant 48 pellets can pass through the pellet retainer 43.

Representative gas generant 48 compositions useful in the dual stage inflator 10 include fuels such as aminotetrazoles, tetrazoles, bitetrazoles, triazoles, the metal salts thereof, nitroguanidines, guanidine nitrate, amino guanidine nitrate, and mixtures thereof; in combination with an oxidizer such as the alkali and alkaline earth metal nitrates, chlorates, perchlorates, ammonium nitrate, and mixtures thereof. The gas generant 48 can be formed into various shapes using various techniques known to those skilled in the art.

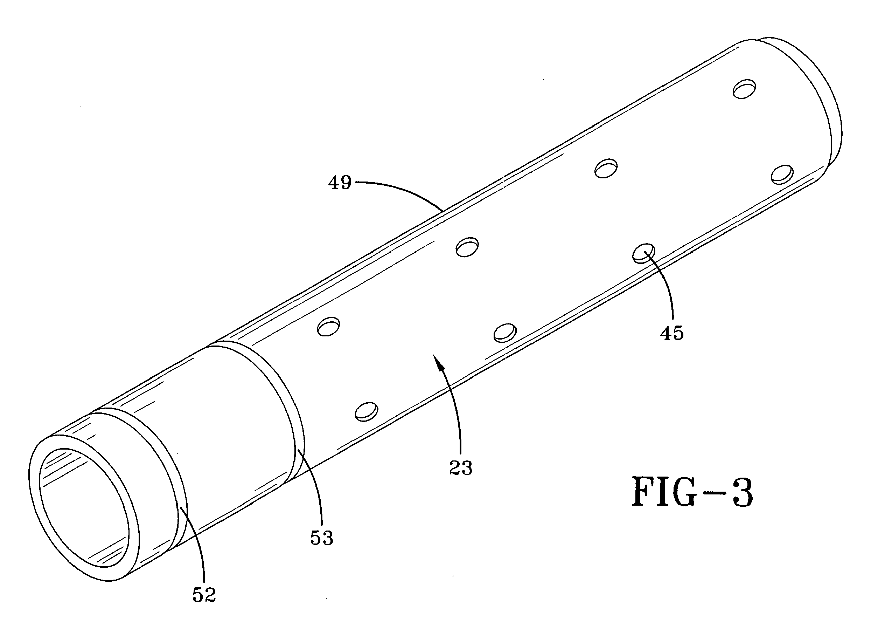

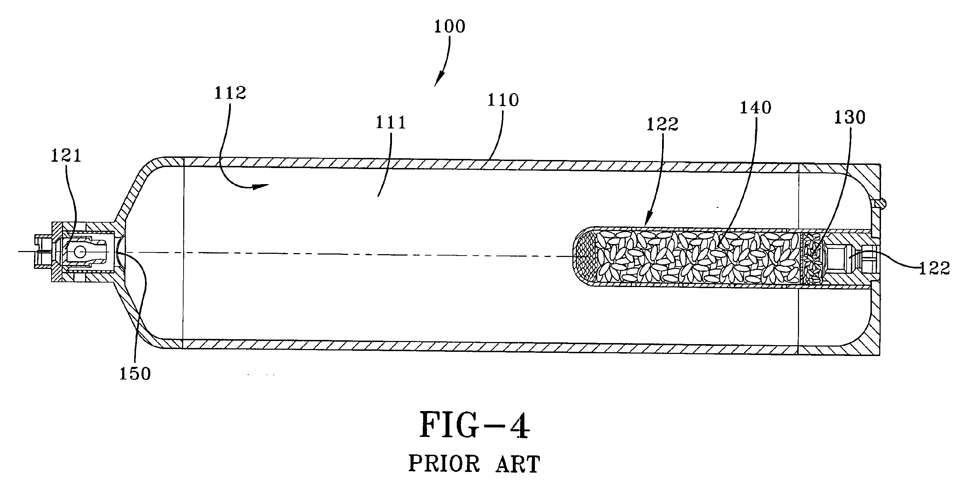

The first gas generant subassembly 23 inside the pressure vessel 12 has a housing 49 retains the gas generant 48 and is made from stainless steel, low carbon steel, or other suitable material. The gas generant subassembly housing 49 has a plurality of apertures 45, which can be seen in FIG. 3. The plurality of apertures 45 are situated along the length of the gas generant subassembly housing 49, and an important facet about the size and number of apertures 45 is that the first gas generator subassembly 23 remains thrust neutral during the burning of the gas generant 48. Importantly, the apertures 45 directly expose the gas generant 48 in the first gas generator subassembly 23 to the stored gas 13 present in the pressure vessel 12. The location of the apertures 45 allows the hot gases to be discharged on the walls of the outer inflator housing 11 thus cooling and retaining solid particulates preventing a portion of the particulates from entering the gas diffuser 26. When the pressure vessel 12 is filled with stored gas 13, some of the stored gas 13 is able to flow into the first gas generator subassembly 23 equalizing the pressure in the pressure vessel 12 with the first gas generant subassembly 23. A sealing disk 46 is utilized in the present invention to prevent the stored gas 13 from escaping from the dual stage inflator 10 through the first gas generator subassembly 23. The sealing disk 46 is attached by laser welding over the igniter housing opening 42 to an enhancer retaining washer 54 or optionally to the end of the support column 21, but could be attached by other welding techniques. Preferably the support column 21 includes an annular depression 51 for retaining the gas generant subassembly housing 49 that includes an inwardly directed annular protrusion 52 that snaps into the depression 51 upon assembly. A crimped protrusion 53 extends inwardly to provide a mechanical stop for the pellet retainer 43 that separates the enhancer charge 47 from the gas generant pellets 48.

At a second end 70 of the pressure vessel 12 is a gas diffuser 26 located in an intermediate gas diffuser portion 10B of the cylindrical outer inflator housing 11. This intermediate gas diffuser portion 10B has a first bulkhead 62 adjacent the first end portion 10A forming an internal second end 70 of the pressure vessel 12. The first bulkhead 62 has one or more openings 28A sealed by a burst disk 24A. A second bulkhead 63 is located adjacent the second end portion 10C and an internal end 72 of the combustion chamber 90 of the second gas generator subassembly 80. The second bulkhead 63 has one or more openings 28B sealed by a burst disk 24B. Interposed between said first and second bulkheads 62, 63 are a plurality of circumferentially aligned exhaust openings 29. The exhaust openings 29 provide passages for the gas to escape into the airbag for inflation when one or both igniters 30, 40 are activated. Inside the intermediate gas diffuser portion 10B is a porous filtration means 74 situated between said first and second bulkheads 62, 63 covering the exhaust openings 29 as shown in Fig. 1. The exhaust openings 29 are preferably sized and oriented in a radially opposed manner to create a thrust neutral condition as the gases leave the inflator 10. As shown the intermediate gas diffuser portion 10B is cylindrically shaped and is welded at end 70 that aligns with the second end of the first end portion 10A of the pressure vessel 12.

At the opposite or second end of the intermediate gas diffuser portion 10B, the second end portion 10C is shown similarly welded along the circumferential ends 73 to the intermediate gas diffuser portion 10B thus forming a second gas generator subassembly 80 with a combustion chamber 90. The second bulkhead 63 as shown has a plurality of openings 28B sealed by a burst disk 24B on the gas diffuser facing side of the bulkhead 63. A gas generant 88 is contained in a region spaced slightly from the second bulkhead 63 by a porous generant retaining means 81 such as a filter or screen that both cushions the gas generant pellets 88 and prevents most of the ignited burning particles from spewing into the airbag upon ignition.

An end cap 33 is welded to the second end portion 10C. A separator bulkhead 75 with a plurality of small holes 28C is sealed by a burst disk 24C. The separator bulkhead 75 isolates the second generant charge of pellets 88 from an enhancer charge 86 that is held in a small cavity 34 in the end cap 33. To activate the charges 86, 88 in the combustion chamber 90 of the second gas generator subassembly 80 an opening device is employed.

The opening device comprises an electrically actuated igniter 30 and the end cap 33. The opening device is positioned so that the longitudinal axis of the opening device is essentially parallel with a longitudinal axis A of the dual stage inflator 10. The igniter 30 communicates with a controller (not shown) via two or more electrodes 31, which in turn communicate with a sensor means (not shown). The igniter 30 is an electrical device that initiates the activation of the inflator when a suitable electric current is passed through a resistor element embedded in one or more layers of pyrotechnic compositions. The igniter 30 may be of the standard direct fire design, receiving the firing current directly from the controller, or the igniter 30 may be of an advanced design which communicates with the controller by digital signals and which contains on board the igniter an application specific integrated circuit, firing capacitor, and related components. The pyrotechnic compositions and load weight contained within the igniter are designed to generate an output energy that will reliably ignite the enhancer charge 86 which will rupture the burst disk or foil 24C. An example of a suitable pyrotechnic composition or ignition material for the present invention is zirconium potassium perchlorate or ZPP. A person skilled in the art will recognize that other ignition materials could be used in the present invention.

The end cap 33 is a metal member that houses the igniter 30. The end cap 33 may be made of a plastic material using an injection molding process. The end cap 33 as seen in FIG. 1 has threads, which are utilized for attachment to an airbag module (not shown).

The opening device may also include reinforced walls 35 for directing an output of energy from the ignition of the ignition material towards the burst disk 24C. The reinforced walls extend towards the burst disk 24C. Without the reinforced walls 35, the igniter 30 would still rupture the burst disk 24C but would need to be loaded with extra ignition material to provide consistent opening at - 40° C. It is also possible to utilize an igniter 30 with a nozzle, which would eliminate the need for reinforced walls 35. The reinforced walls 35 act in a similar fashion to a nozzle by focusing the output energy in the direction of the burst disk 24C.

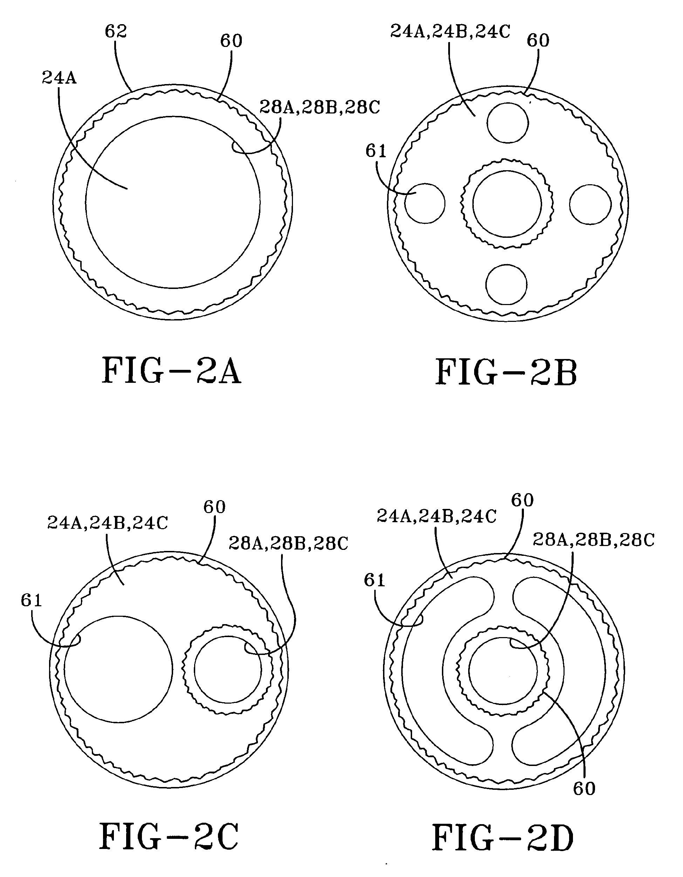

The burst disk 24A is attached to the first bulkhead 62 of the intermediate gas diffuser portion 10B and seals the first bulkhead 62 so that stored gas 13 cannot exit the dual stage inflator 10. The burst disk 24A shown in FIG. 2A is made from stainless steel, inconel material, monel material, or any other suitable material that allows the burst disk 24A to open reliably at -40° C. The hardness of the burst disk 24A should be between "half hard" and "full hard" to minimize the thickness of the burst disk 24A. Hardness is the degree to which a metal will resist cutting, abrasion, penetration, bending and stretching. The indicated hardness of metals will differ somewhat with the specific apparatus and technique of measuring. The radially outer portion of the burst disk 24A is attached to the bulkhead 62 by a laser weld 60 but could be attached by other welding techniques. The radially inner portion of the burst disk 24A is not attached to any portion of the gas diffuser 26 and bulges upon filling of the pressure vessel 12. The burst disk 24A adopts a dome shape configuration due to the force of the stored gas 13 being applied to the burst disk 24A. Alternatively, the burst disk 24A can be bulged in the direction of the opening device by a hydro-forming process after the burst disk. 24A is attached to the bulkhead 62.

Upon actuation of the igniter 30, the enhancer 86 ignites and ruptures the burst disk 24C, which ignites the gas generant charge 88, which ruptures the burst disk 24B resulting in discharge openings 28B, which allows the ignited gases to flow into the gas diffuser 26 and out of the dual stage inflator 10. The burst disks 24A, B or C can have one or more secondary discharge openings 61 to control the internal pressure and flow within the inflator 10. FIGS. 2B-2D show various burst disk configurations having one discharge opening 28 and at least one secondary discharge opening 61. The actuation of the igniters 30, 40 ruptures the burst disks 24 A, B or C so there is one or more discharge flow paths through the openings 28A, 28B, 28C and 61 allowing the ignited gases to flow out of the inflator 10 through the exhaust openings 29. The actuation of the second gas generator subassembly 80 can be accomplished without rupturing the burst disk 24A by sizing the openings 28A, 28B, 28C and 61 such that the airbag can be more slowly and gently filled to accommodate a small child or out of position occupant. More typically the first gas generant subassembly 23 is actuated before or at the same time the second gas generator subassembly 80 is activated. Typically in normal operation the igniter 40 is fired bursting the disk 46 and igniting the enhancer 47 which then ignites the generant pellets 48 which rapidly heats the inert gas 13 causing the internal pressure of the pressure vessel 12 to increase and rupture the burst disk 24A in such a way that one or more discharge opening(s) 28, 61 are created allowing the gases to enter the intermediate gas diffuser portion 10B and exit out the exhaust openings.

The cylindrical elongated shape of the inflator 10 provides a compact device that can be made in a size more compact diametrically while still providing various deployment scenarios. As shown the outer inflator housing 11 has an outside diameter of 50 mm, and can be made even smaller. A 45 mm diameter is feasible without necessarily increasing the length of the device. This ability to reduce the size of the inflator 10 without sacrificing performance is valuable to many vehicle manufacturers whose need to accommodate the airbag module takes space away from other features such as the glove box on the instrument panel.

The inflator as shown can be deployed in many different deployment scenarios.

The normal deployment involves activating the first gas generant subassembly 23, heating the inert gas 13 and rupturing the first disk 24A to fill the airbag. This scenario arrives at maximum airbag inflation pressure the quickest.

The second deployment scenario would be to fire both gas generant charges 48, 88 simultaneously; this fills the airbag the quickest to the largest volume and also achieves maximum airbag inflation pressure the quickest.

A third deployment scenario is to employ the first deployment scenario followed by a sequentially delayed activation of the second gas generator subassembly 80 to prolong inflation of the airbag.

A fourth deployment scenario is to activate only the second gas generator subassembly 80. This results in a lower output of gases to provide a gentler airbag opening to accommodate a child or out of position occupant.

The primary advantage of the present invention is that the time delays possible are greatly increased by the inflator having separate gas generating sources. One gas generating source combined with pressurized charge of inert gas the other gas generating source separate from and isolated from the pressure vessel. A key advantage of the present invention is the ignition of one gas generator subassembly 23, 80 will not cause the other gas generator subassembly 23, 80 to ignite. The sizing of the discharge openings 28A, 28B, 28C and 61 and the large exhaust openings 29 are designed to insure the internal pressures are quickly vented to fill the airbag avoiding a secondary undesired ignition. Only by igniting both igniters will both the charges ignite and thus ignition can be simultaneously timed or sequentially triggered as desired.

## Claims

1. An airbag inflator (10) comprising:
a cylindrical outer inflator housing (11) forming a pressure vessel (12) for storing inert gas (13) within a first end portion (10A); a second end portion (10C) forming a combustion chamber (90), and an intermediate diffuser portion (10B) interposed between the first and second end portions (10A, 10C) for exhausting gas from the airbag inflator (10) into an airbag;
a first gas generator subassembly (23) disposed within the first end portion (10A) and in communication with the stored inert gas (13); and
a second gas generator subassembly (80) disposed within the second end portion (10C) and isolated from the inert gas (13) by one or more burst disks (24A, 24B, 24C).

2. An airbag inflator (10) according to claim 1 wherein the first gas generator subassembly (23) comprises a first igniter (40), a first enhancer (47), a first gas generant (48), and a first gas generant subassembly housing (49), the first gas generant subassembly housing (49) retains the first gas generant (48) and includes a plurality of apertures (45) whereby the first gas generant (48) is in communication with the stored gas (13) before the first gas generant (48) is ignited wherein a sealing disk (46) is positioned within the first gas generant subassembly housing (4) between the first enhancer (47) and the first igniter (40) to prevent leakage of stored gas (13) from the airbag inflator (10).

3. An airbag inflator (10) according to claim 2 wherein the first end portion (10A) of the cylindrical outer inflator housing (11) has a first end closure (20) affixed thereto, the first end closure (20) having a central support column (21) that fixes the first igniter (40) and the first generator subassembly housing (23) with the pressure vessel (12).

4. An airbag inflator (10) according to any of claims 1-3 wherein the intermediate gas diffuser portion (10B) has a first bulkhead (62) adjacent the first end portion (10A) forming an internal end (70) of the pressure vessel (12), the first bulkhead having (62) one or more openings (28A) sealed by a burst disk (24A), and a second bulkhead (63) adjacent the second end portion (10C) forming an internal end (72) of the combustion chamber (90), the second bulkhead at least one or opening (28B) sealed by a burst disk (24B), interposed between said first and said second bulkheads (62, 63) are a plurality of radially aligned exhaust openings (29).

5. An airbag inflator (10) according to any of claims 1 - 4 wherein the second gas generator subassembly (80) comprises a second igniter (30), a second enhancer (86), contained in an end cap (33) and a second gas generant (88) contained in the combustion chamber (90) and separated from said second enhancer (86) by a bulkhead (75) with opening (28C) sealed by a burst disk (24C).

6. An airbag inflator (10) according to any of claims 1-5 wherein the second gas generator subassembly (80) further comprises a porous generant retaining means (81).

7. An airbag inflator (10) according to any of claims 1 - 6 wherein the intermediate gas diffuser portion (10B) includes a porous filtration means (74) between said first and second bulkheads (62, 63) covering the exhaust openings (29).

8. An airbag inflator (10) according to any of claims 1 - 7 wherein first gas generant subassembly housing (49) has a plurality of apertures (45) therein that are situated along the length of the gas generant (48), wherein the apertures (45) have a size and shape that does not the gas generant (48) to pass thereto, wherein the apertures are positioned to direct hot gasses generated from the burning of the gas generant (48) toward the outer inflator housing (11) of the pressure vessel (12).

9. An airbag inflator (10) according to any of claims 1 - 8 wherein the cylindrical outer inflator housing (11) is formed with three or more substantially cylindrical portions (10A, 10B, 10C) each welded to at least one of the other substantially cylindrical portions.

10. An airbag inflator (10) according to any of claims 1 - 9 wherein an actuation means can selectively actuate either the first igniter (40) alone, the second igniter (30) alone or both igniters (30, 40) in a sequence or simultaneously.
